# EUROPÄISCHE PATENTANMELDUNG

(11) **EP 3 560 725 A1**
(43) Veröffentlichungstag der Anmeldung: **30.10.2019**
(21) Anmeldenummer: 19176194.9
(22) Anmeldetag: 02.12.2014
(51) Int. Cl.: B43K 15/00, B23C 5/10, B23K 26/00, B41C 3/04, B41D 7/00, B44B 3/06

(54) **ZUSATZAUFNAHME, INSBESONDERE HALTEELEMENT, FÜR EIN WERKSTÜCK**

(30) Priorität: 09.12.2013 AT 508102013
(62) Teilanmeldung aus: 14833449.3
(71) Anmelder: Trodat GmbH, 4600 Wels (AT)
(72) Erfinder: Pinot, Jean-Philippe, 94 210 La Varenne Saint Hilaire (FR); Verrier, Stéphanie, 94880 Noiseau (FR)

(57) **Zusammenfassung**

Die Erfindung beschreibt eine Zusatzaufnahme, insbesondere Halteelement (30), für ein Werkstück (9), umfassend zumindest ein Gehäuse in dem das Werkstück (9) einlegbar ist, wobei das Halteelement (30) derart ausgebildet ist, dass dieses das Werkstück (9) über eine Druckkraft von einem Seitenteil (39) positioniert ist und/oder von einer Bodenplatte (40) oder Auflagesteg (36) gegen eine Oberfläche (34) presst und in der Oberfläche (34) eine Ausnehmung (35) vorgesehen ist, über die eine Bearbeitung des Werkstückes (9) möglich ist bzw. erfolgt.

## Beschreibung

Die Erfindung betrifft eine Zusatzaufnahme, insbesondere Halteelement, für ein Werkstück (9), wie es im Oberbegriff des Anspruches 1 beschrieben ist.

Aus dem Stand der Technik sind System bekannt, bei denen von speziell geschultem Fachpersonal, sogenannten Stempelmachern, Stempelplatten bzw. Textplatten für Stempel, insbesondere Handstempel, erstellt werden. Dazu wird von dem Fachpersonal an einem Computer unter zu Hilfenahme von standardisierter Software, insbesondere Corel-Draw, Word, usw., ein Stempelabdruck durch Grafiken und/oder Texte entsprechend den Wünschen des Kunden erstellt. Daraufhin werden die Daten an ein Bearbeitungsgerät, insbesondere einen Laserplotter, oder eine Steuerung hierfür übertragen, worauf eine Konvertierung der Daten bevorzugt unter zu Hilfenahme von hinterlegten Daten u/o Tabellen erfolgt. Anschließend legt das Fachpersonal einen sogenannten Rohling, der aus einem flexiblen Gummi gebildet ist, in die Bearbeitungsvorrichtung, worauf eine manuelle und oder automatische Positionierung des Bearbeitungsgerätes, insbesondere einer Strahlquelle eines Lasers, erfolgt. Das Fachpersonal startet daraufhin den Bearbeitungsvorgang, sodass ein Negativabdruck des vom Fachpersonal am Computer erstellten Stempelabdrucks am Rohling erzeugt wird. Nachdem der Bearbeitungsvorgang beendet ist, entnimmt das Fachpersonal den Rohling und reinigt diesen von den Bearbeitungsrückständen. Anschließend wird der negative Stempelabdruck auf den Druckplattenträger, an dem bereits eine Klebeschicht angeordnet ist, aufgeklebt. Nachteilig ist hierbei, dass bei einem derartigen Vorgehen der Kunde den Stempel nicht direkt mitnehmen kann, sondern diesen erst später abholen kann bzw. ihm zugeschickt wird. Darüber hinaus kann der Kunde auch keinen Einfluss bei der Erstellung des Stempelabdruckes nehmen, da dieser vom Fachpersonal erstellt wird und nicht direkt vom Kunden.

Aus der WO 2011/151604 A ist ein Bearbeitungssystem zum Gravieren von Anhängern, insbesondere Kettenanhänger, bekannt. Dabei wird auf einen mit dem Bearbeitungsgerät verbundenen Eingabegerät ein handschriftliche Text bzw. Graphik über einen Eingabestift erzeugt, der anschließend an einem Computer übertragen wird. Vom Computer wird anschließend das Bearbeitungsgerät, in dem der Anhänger eingelegt wird, angesteuert, sodass der handschriftlich erzeugte Text bzw. Graphik in den Anhänger graviert wird. Nachteilig ist hierbei, dass nur ein einziger Bearbeitungsprozess, insbesondere zum Gravieren von Anhängern, mit der Anlage durchgeführt werden kann.

Weiters ist aus dem Stand der Technik, insbesondere aus der US 7 853 353 B, der US 7 877 909 B, der US 7 894 935 B, der US 8050796 B und der US 8 413 357 B, ein Bearbeitungssystem bekannt, bei dem oberhalb des Bearbeitungsbereich ein daran befestigtes Eingabe- und Anzeigeelement angeordnet ist, über den ein User seine Eingabe zum Gravieren eines Anhängers, insbesondere eines Herz-Anhängers, durchführen kann. Weiters weist das Bearbeitungssystem eine verfahrbare Aufnahmevorrichtung im Bearbeitungsbereich auf, in der der Anhänger positioniert wird. Dazu wird die Aufnahmevorrichtung in eine Einlegeposition, bei der die Aufnahmevorrichtung teilweise aus den Gehäuse des Bearbeitungssystem herausragt, verfahren, sodass der Anhänger in die Aufnahmevorrichtung eingelegt werden kann. Daraufhin wird die Aufnahmevorrichtung zur Bearbeitung in die Bearbeitungsposition unterhalb des Eingabe- und Anzeigeelementes gefahren. Nach Beendigung des Graviervorganges wird die Aufnahmevorrichtung wiederum zur Entnahme des Anhängers verfahren. Nachteilig ist hierbei, dass ein sehr hoher Aufwand für nur einen Bearbeitungsprozess, nämlich das Gravieren eines Anhängers, notwendig ist.

Aus der US 6 732 649 B1 ist ein Verfahren zum Erzeugen einer Stempelplatte beschrieben, wobei dabei über am Bearbeitungsgerät die Daten für die Stempelplatten eingeben werden und anschließend ein photopolymere Stempelplatte belichtet wird. Nachteilig ist bei derartigen Systemen, dass mit dem Bearbeitungsgerät nur eine Aufgabe, nämliche die des Erzeugens einer photopolymeren Stempelplatte, durchgeführt werden kann.

Die Aufgabe der Erfindung liegt darin, ein Bearbeitungssystem, eine Bearbeitungseinlage, eine Zusatzaufnahme, sowie ein Verfahren zum Ermitteln eines in einer Bearbeitungseinlage eingelegten Werkstückes zu schaffen, bei dem die Bedienung oder Handhabung wesentlich vereinfacht ist. Darüber hinaus liegt die Aufgabe auch darin, einen flexiblen Einsatz der Komponente zu schaffen. Eine weitere Aufgabe liegt darin, die Nachteile des Standes der Technik möglichst zu beheben.

Die Aufgabe der Erfindung wird durch eine Zusatzaufnahme, insbesondere einem Halteelement, gelöst, bei dem das Halteelement derart ausgebildet ist, dass dieses das Werkstück über eine Druckkraft von einem Seitenteil positioniert ist und/oder von einer Bodenplatte oder Auflagesteg gegen eine Oberfläche presst und in der Oberfläche eine Ausnehmung vorgesehen ist, über die eine Bearbeitung des Werkstückes möglich ist bzw. erfolgt.

Vorteilhaft ist dabei, dass ein einfacher kostengünstiger Aufbau für die Positionierung von Werkstücken möglich ist. Gleichzeitig wird eine einfache Bedienung ermöglicht, da der User den Gegenstand einfach ausrichten kann. Auch wird durch den Einsatz eines derartigen Zusatzelements eine wesentliche Erhöhung der Flexibilität der Anlage erreicht. Somit kann eine wesentlich größere Anzahl unterschiedlicher Werkstücke bearbeitet werden.

Von Vorteil ist eine Ausgestaltung, bei der die Druckkraft von einem Druckelement, insbesondere einer Spiralfeder, gebildet ist, da dadurch ein einfacher kostengünstiger Aufbaue ermöglicht wird.

Bei einer Ausgestaltung, bei der in einem Halteelement mehrere parallel angeordnete Werkstücke positionierbar sind, wird in vorteilhafter Weise erreicht, dass dadurch mit einer Eingabe mehrere Werkstücke aufeinander folgenden ohne Unterbrechung des Bearbeitungsprozesse bearbeitet werden können. Dadurch kann Vorort eine Kleinserie hergestellt werden. Selbstverständlich ist es dabei möglich, dass für jede Position eine unterschiedliche Eingabe vorgenommen werden kann, d.h., dass beispielsweise bei 5 Stück eingelegte Kugelschreiber jeder mit einer anderem Text graviert werden kann.

Es ist aber auch eine Ausgestaltung von Vorteil, bei der an den Auflagestegen bzw. der Bodenplatte zumindest eine Einkerbung, die bevorzugt das Werkstück gerade zur Ausnehmung ausrichtet, angeordnet ist, da dadurch eine einfache Positionierung möglich ist, wobei durch das Pressen gegen die Oberfläche eine Fixierung bzw. Verdrehsicherung erreicht wird.

Von Vorteil ist eine Ausgestaltung, bei der ein Bush-Button für die Auflagestege bzw. für die Bodenplatte angeordnet ist, der diese entgegen der Druckkraft zum Einlegen der Werkstück betätigt, da dadurch ein einfacher Aufbau geschaffen wird.

Die Erfindung wird anschließend in Form von Ausführungsbeispielen beschrieben, wobei darauf hingewiesen wird, dass die Erfindung nicht auf die dargestellten und beschriebenen Ausführungsbeispiele bzw. Lösungen begrenzt ist.

Es zeigen:
- Fig.1: ein Übersichtschaubild eines Bearbeitungssystems zur Bearbeitung von Werkstücken und Erzeugung von Textplatten für Stempel;
- Fig.2: eine schaubildliche Darstellung einer Bearbeitungseinlage zum Positionieren eines Werkstückes mit eingelegen Werkstücken;
- Fig.3: eine schematische Darstellung eines Teilausschnittes der Bearbeitungseinlage zur besseren Veranschaulichung einer stufig ausgebildeten Positionierausnehmung;
- Fig.4: eine schaubildliche Darstellung der Bearbeitungseinlage mit eingesetzten Zusatzelement;
- Fig.5: eine schaubildliche Darstellung des Zusatzelementes als Haltelement mit eingelegtem Werkstück, insbesondere einem Kugelschreiber;
- Fig.6: ein weiteres Ausführungsbeispiel einer schaubildlichen Darstellung eines Haltelemente mit eingelegtem Werkstück, insbesondere einem Kugelschreiber;
- Fig.7: eine schaubildliche Darstellung einer weiteren Ausbildung des Haltelementes für ein weiteres Werkstück, insbesondere einem USB-Stick;
- Fig.8: eine schaubildliche Darstellung des Halteelementes nach Fig. 7 mit abgenommener Oberfläche;
- Fig.9: eine schematisch, vereinfachte Darstellung eines Teilbereiches des Aufbaus eines Laserplotters mit eingelegtem Werkstück.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen. Auch können Einzelmerkmale oder Merkmalskombinationen aus den gezeigten und beschriebenen Ausführungsbeispielen für sich eigenständige erfinderische Lösungen darstellen.

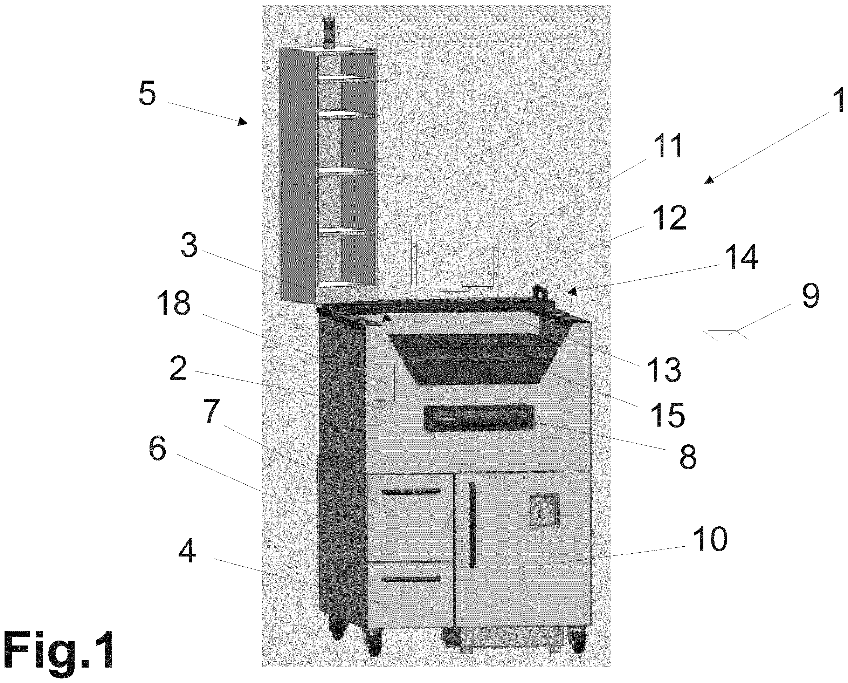

In den Fig. 1 bis 9 ist ein Bearbeitungssystem 1 mit verschiedensten Komponenten bzw. Aufbauten gezeigt.

Das Bearbeitungssystem 1, gemäß Fig.1, weist ein Gehäuse 2 auf, in dem die verschiedensten Komponenten integriert sind. Das Bearbeitungssystem 1 umfasst zumindest einen Bearbeitungsbereich 3, einen Steuerbereich 4 und optional einen Aufnahmebereich 5 und/oder Präsentationsbereich 5. Hierbei wird darauf hingewiesen, dass die einzelnen Anordnungen der Komponenten im Gehäuse 2 nicht auf die Darstellung beschränkt ist, sondern die Komponenten entsprechend an andere Stellen im Gehäuse 2 angeordnet sein können.

Das Gehäuse 2 ist bevorzugt aus Metall, insbesondere Blech, gebildet und weist mehrere Türen auf, sodass eine einfache Zugänglichkeit der dahinter angeordneten Komponenten möglich ist. Bevorzugt ist im hinteren Bereich, insbesondere auf der Rückseite, eine Stromversorgungseinheit 6 angeordnet, von der aus die einzelnen Komponenten mit Energie versorgt werden können. Die Stromversorgungseinheit 6 wird über ein Anschlusskabel (nicht dargestellt) mit einem öffentlichen Stromversorgungsnetz (nicht dargestellt) verbunden. Es ist auch möglich, dass in der Stromversorgungseinheit 6 ein Notstromsystem (nicht dargestellt) integriert ist, welches bevorzugt automatisch aktiviert ist, wenn das öffentliche Stromversorgungsnetz keine Energie mehr liefert. Somit ist sichergestellt, dass bei einem Stromausfall zumindest über eine gewisse Zeitdauer das Bearbeitungssystem 1 oder zumindest die wesentlichen Elemente noch mit Energie versorgt werden, sodass bereits vorgenomme Einstellungen, Bearbeitungsvorgänge oder dgl., beendet und/oder gespeichert werden können.

Weiters ist im Gehäuse 2 ein Kommunikationssystem 7, insbesondere ein Computer mit einem Drucker, angeordnet. Das Kommunikationssystem 7 dient dazu, um von einem Nutzer eingegebenen Aufträge auszugeben und/oder einen optischen Ausdruck der Eingabe zur Kontrolle zu haben, d.h., dass bei einer Nutzung des Bearbeitungssystem eine schriftliches Bestätigung bzw. Auftrag ausgegeben werden kann, die der Nutzer für sich verwenden kann oder das der Nutzer sich einen Ausdruck seiner erstellten Eingabe zur Voransicht machen kann, um diesen bei nicht gefallen noch nachbearbeiten zu können, bevor dieser umgesetzt wird. Dabei ist es auch möglich, dass im Kommunikationssystem 7 auch ein Scan-Gerät angeordnet ist, über das beispielsweise die abgezeichnete Bestätigung oder der Auftrag eingescannt werden kann. Bevorzugt wird das Scan-Gerät jedoch dazu verwendet, um beispielsweise Graphiken, Layouts, Bilder, Firmenlogos einzuscannen, welche für die spätere Bearbeitung verwendet wird können. Auch ist es möglich, dass anstelle der gezeigten Tür eine Ausdrucköffnung vorgesehen ist, aus der direkt der Ausdruck ausgegeben wird.

Auch ist es möglich, dass ein oder mehrere zusätzliches Module (nicht dargestellt) mit darin integrierten Komponenten an das Gehäuse 2 des Bearbeitungssystems 1 zu koppeln. Bevorzugt werden diese an den Seitenwänden des Gehäuses 2 angebracht. Dadurch ist eine nachträgliche Erweiterung des Bearbeitungssystem 1 möglich. Beispielsweise kann ein derartiges Modul als Komponente einen Scanner aufweisen, der beispielsweise auf das Modul aufgestellt ist oder derart integriert ist, dass dieser von Nutzer von oben einfach bedient werden kann, in dem dieser eine Abdeckung bzw. Deckel öffnet. Auch ist es möglich, dass ein derartiges Modul als Lager für Werkstücke oder Papier genützt werden kann.

Um eine sogenanntes Stand-Alone-Gerät zu schaffen, ist bevorzugt ein Recyclingsystem 8 im Gehäuse 2 des Bearbeitungssystem 1 angeordnet. Das Recyclingsystem 2 weist einen Auffangbehälter und eine Einwurföffnung auf, durch die Reste eines bearbeiteten Werkstückes 9 bzw. Rohlings 9 eingeworfen werden können.

Weiters ist im Bearbeitungssystem 1 ein Reinigungssystem 10, insbesondere eine Absauganlage, integriert, die einerseits während eines Bearbeitungsvorganges im Bearbeitungsbereich 3 und andererseits nach einem Bearbeitungsvorganges über eine definierte Zeitdauer zum Reinigen des Werkstückes 9 aktiviert ist. Das Reinigungssystem 10 ist bevorzugt derart ausgebildet, dass während eines Bearbeitungsvorganges die Luft im Bereich des zu bearbeitenden Werkstückes 9 absaugt, sodass beim Öffnen des Bearbeitungsraumes keine Geruchsbelästigungen für den User bzw. Operator entstehen. Nach Beendigung des Bearbeitungsvorganges wird vom Reinigungssystem 10 automatisch beispielsweise über eine Ventilklappe (nicht dargestellt) auf die Reinigungsfunktion für den Nutzer umgeschaltet, sodass dieser nunmehr über einen Schlauch (nicht dargestellt) mit einer daran befestigten Saugbürste das Werkstück 9 reinigen kann und somit die Staubpartikel abgesagt werden. Damit im Aufstellungsbereich keinerlei Geruchsbelästigungen auftreten, ist das Reinigungssystem 10 mit entsprechenden Filtern ausgestattet.

Wesentlich bei einem derartige Bearbeitungssystem 1 ist, dass mehrere unterschiedliche Werkstücke 9 bzw. Rohlinge 9 mit einem einzigen Gerät verarbeitet bzw. bearbeitet werden können, wobei die Bedienung des Gerätes bzw. des Bearbeitungssystem 1 derart vereinfacht wurde, dass lediglich ein Operator oder ein Kunde selbstständig mit dem Bearbeitungssystem 1 arbeiten kann. D.h., dass für die Vorortbetreuung keinerlei Fachpersonal für das Bearbeitungsgerät vorhanden ist, sondern lediglich ein geschulter Operator, insbesondere Verkäufer eines Kaufhauses.

Für die einfache Bedienung ist am Bearbeitungssystem 1 ein abnehmbares Eingabegerät bzw. Anzeigeelement 11, an der eine Bedienersoftware, im Folgenden auch "Trodesign" genannt, installiert ist, angeordnet. Im Steuerbereich 4 ist eine mit der Bedienersoftware korrespondierende Steuersoftware, im Folgenden auch "JobControl" genannt, integriert, und dass durch Verbinden des Anzeigeelementes 11 mit dem Bearbeitungssystem 2 oder durch Aktivierung über einen Button 12 am Anzeigeelement 11 das Bearbeitungssystem 1 mit diesem Anzeigeelement 11 verbunden ist, d.h., dass das Anzeigeelement 11 unabhängig vom Bearbeitungssystem 1, also bei abgenommen Anzeigeelement 11, betrieben wird bzw. betreibbar ist, sodass mit der am Anzeigeelement 11 installierten Bedienersoftware gearbeitet werden kann und erst durch bewusstes Koppeln bzw. Verbinden mit dem Bearbeitungssystem 1 das Anzeigeelement 11 in das Bearbeitungssystem integriert ist. Durch eine derartige Ausbildung hat der Nutzer die Möglichkeit das Anzeigeelement 11 vom Bearbeitungsgerät abzunehmen und in Ruhe seine Eingabe vorzunehmen. Selbstverständlich ist es möglich, dass das Anzeigeelement 11 auch am Bearbeitungssystem 1 positioniert bleiben kann und direkt die Eingabe vorgenommen werden können. Das sogenannte Anzeigeelement 11 dient als Eingabegerät, welches bevorzugt eine Touchfunktion aufweist, d.h., dass durch Berühren der Oberfläche eine Eingabe am Anzeigeelemente 11 vorgenommen werden kann.

Für das Anzeigeelement 11 ist eine Kontaktvorrichtung 13 zum Kontaktieren, insbesondere zum Hineinstecken, angeordnet. Bevorzugt ist die Kontaktvorrichtung 13 auf einem Slidingboard 14 angeordnet, wobei das Slidingboard 14 zum Abdecken des Bearbeitungsbereichs 3, insbesondere zum Abdecken eines Teilbereichs des Bearbeitungsbereichs 3, ausgebildet ist. Als Sicherheitsfunktion kann das Slidingboard 14 mit entsprechenden Sensoren ausgestattet sein, sodass erst durch Schließen des Slidingboards 14 eine Aktivierung des Bearbeitungssystem 1 möglich ist, wogegen beim Öffnen während eines Arbeitsprozesses dieser unterbrochen wird. Selbstverständlich ist es möglich, dass die Stromversorgung, insbesondere das Aufladen des Anzeigeelementes 11 über die Kontaktvorrichtung 13 erfolgt.

Bevorzugt erfolgt die Aktivierung des Bearbeitungssystem 1 durch Verbinden des Anzeigeelementes 11 mit der Kontaktvorrichtung 13 oder drahtlos durch Verbinden über eine Betätigung des entsprechen hard- oder softwaremäßigen ausgeführten Button 12. Durch das Verbinden wird beispielsweise eine Datenübertragung von der Bedienersoftware zur Steuersoftware ausgelöst, sodass eine Verarbeitung möglich ist. Hierzu ist der Bearbeitungsbereich durch einen Laserplotter 15 gebildet. Der Laserplotter 15 ist zum Gravieren, Markieren, Schneiden und Herstellen für unterschiedliche Werkstücke 9, insbesondere vom Stempelplatten bzw. Stempelplatten-Rohlingen 9, Schilder, Handys, Tablet-Computer, Kugelschreiber, Sticks, Computerzubehör, wie beispielsweise Hüllen, Taschen, usw., ausgebildet. Es kann ein ein- oder mehrstrahliger Laserplotter 15 verwendet werden, wobei bei einem Einsatz eines mehrstrahligen Laserplotters 15 für die unterschiedlichen Materialien die unterschiedlichen Laser verwendet werden können, d.h., dass beispielsweise vom Operator bzw. User in der Bedienersoftware bereits das zu bearbeitende Material ausgewählt wird, sodass anschließend von der Steuersoftware die entsprechende Laserquelle bzw. Laser aktiviert wird.

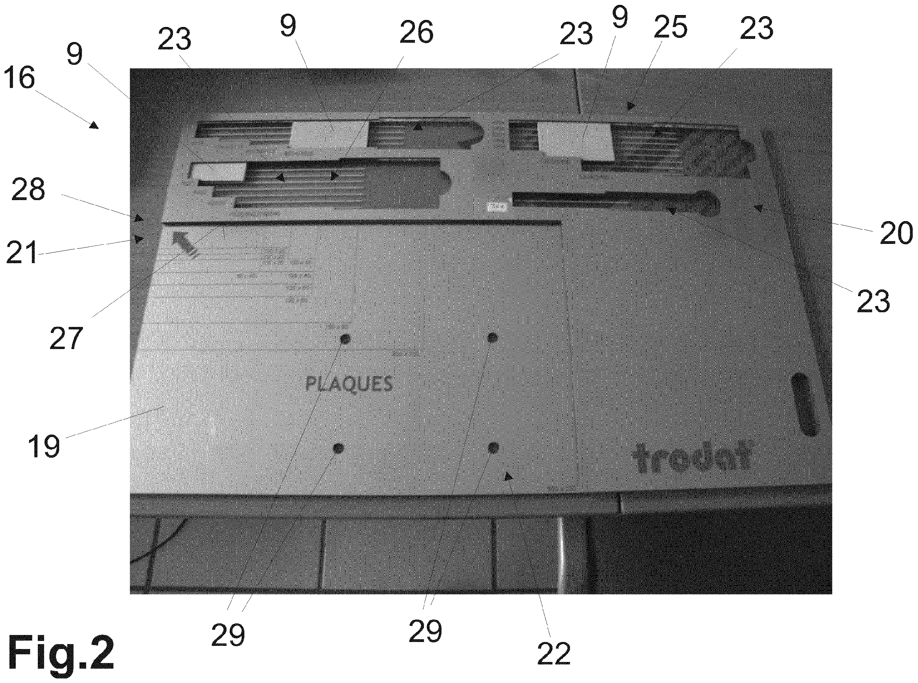

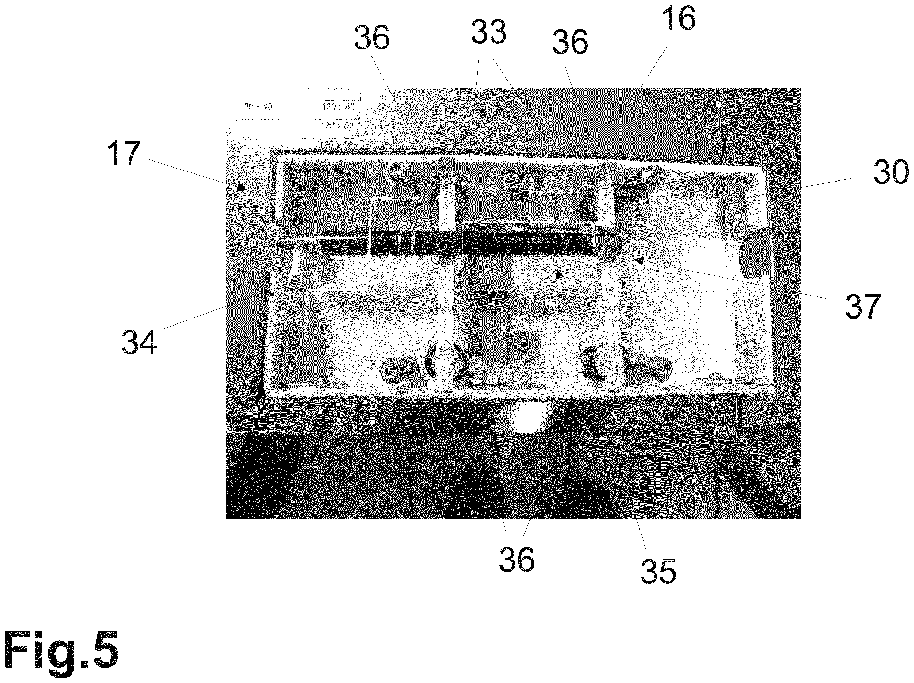

Um eine weitere bedienerfreundliche Ausstattung des Bearbeitungssystem 1 zu erreichen, ist der Bearbeitungsbereich 3 des Laserplotters 15 derart ausgebildet, dass in den Bearbeitungsbereich 3 des Laserplotters 15 eine Bearbeitungseinlage 16, wie detailliert in den Fig. 2 bis 4 ersichtlich, einlegbar ist bzw. angeordnet ist. Bevorzugt ist die Bearbeitungseinlage 16 derart ausgebildet, dass auf einer Bearbeitungseinlage 16 mehrere unterschiedliche Werkstücke 9 bzw. Rohlinge 9 positionierbar ist, d.h., dass beispielsweise auf einer Bearbeitungseinlage 16 ein Stempelplatten-Rohling 9, ein Schild (nicht dargestellt) oder ein Zusatzelement 17, wie in den Fig. 5 bis 8 gezeigt, positionierbar ist, sodass für diese unterschiedliche Werkstücke 9 die Bearbeitungseinlage 16 nicht getauscht werden muss. Eine derartige Bearbeitungseinlage 16 wird nachstehend noch detailliert beschrieben. Durch die Ausbildung der Bearbeitungseinlage 16 für mehrere unterschiedlicher Werkstücke 9 wird der Bedienerkomfort wesentlich erhöht, da nicht ständig die Bearbeitungseinlage 16 gewechselt werden muss, sondern die wesentlichen Werkstücke 9 mit ein und derselben Bearbeitungseinlage 16 bearbeitet werden kann. Gleichzeitig erhöht sich dadurch auch die Arbeitsfrequenz eines derartigen Bearbeitungssystems 16.

Weiters ist es möglich, dass am Bearbeitungssystem 1 ein Kontrollmonitor 18 fix angeordnet ist, an dem nach Bindung des Bearbeitungssystem 1 mit dem Anzeigeelement 11 die benötigten Komponenten bzw. Elemente zum Einlegen in den Bearbeitungsbereich 3 angezeigt werden, d.h., dass beispielsweise ein User das abnehmbare Anzeigeelement 16 mit sich nimmt und entfernt vom Bearbeitungssystem 1 seine Eingaben am Anzeigeelement 11 vornimmt, sodass nach Fertigstellung der Eingabe der User das Anzeigeelement 11 mit dem Bearbeitungssystem 1 bindet, sodass entsprechend benötigte Elemente, Werkstücke 9 oder Parametereingaben am Kontrollmonitor 18 angezeigt werden. Ein Operator kann somit den entsprechenden Tätigkeiten ohne das Anzeigeelement 11 durchführen, sodass der User weitere Eingaben vornehmen kann oder das Anzeigeelement 11 an einen weiteren Kunden übergeben kann. Der Kontrollmonitor 16 ist nicht zwingend erforderlich und kann auch innerhalb des Gehäuses 2, beispielsweise im Steuerbereich 4, integriert sein.

Durch eine derartige Ausbildung des sogenannten Koppelns des Bearbeitungssystem 1 mit einem abnehmbaren Eingabeelement bzw. Anzeigeelement 11 ist es möglich, dass gleichzeitig mehrere mit dem Bearbeitungssystem 1 korrespondierende Anzeigeelemente 11 aktiviert bzw. aktivierbar sind, und dass an den verschiedensten Anzeigeelementen 11 unterschiedliche Eingaben in die jeweils installierte Bedienersoftware durchführbar sind, d.h., dass mehrere Kunden bzw. User gleichzeitig an den verschiedensten Anzeigeelemente 11 ihre Eingabe für die Bearbeitung unterschiedlichstes Bearbeitungsvorgänge eingeben können. Bevorzugt wird dabei als Anzeigeelement 11 ein Touch-Panel, Tablet-Computer, wie beispielsweise ein Ipad oder dgl., verwendet. Wesentlich ist für das Anzeigeelement 11, dass darauf die Bedienersoftware zur einfachen Eingabe für den User betrieben werden kann und dieses bevorzugt mit den Fingern betätigbar ist. Dadurch wird nämlich eine einfache Ein-Finger-Bedienung geschaffen und die Bedienerfreundlichkeit wesentlich erhöht.

Es ist grundsätzlich aber auch möglich, dass am Bearbeitungssystem 1 eine Tastatur (nicht dargestellt) integriert ist, sodass durch Verbinden, insbesondere Aufstecken eines der mehreren Anzeigeelementen 11 auf die Kontaktvorrichtung 13, die Tastatur aktiviert ist und die Eingabe über die Tastatur möglich ist. Bevorzugt wird jedoch ein berührungsempfindliches Anzeigeelement 11 für eine Eingabe mit den Fingern verwendet. Auch kann die Verwendung mehrere Anzeigeelemente 11 auf den Kundenandrang abgestimmt werden, d.h., dass bei sehr großen Kundenandrang der Operator einfach weitere Anzeigeelemente 11 einschaltet, sodass die Kunden darauf ihre Eingaben machen, da die Anzeigeelemente 11 unabhängig vom Bearbeitungssystem 1 arbeiten bzw. betrieben werden können. Durch eine derartige flexible Anpassung der Eingabemöglichkeiten wird in vorteilhafterweise erreicht, dass gleichzeitig viele User ihre Eingaben vornehmen können, worauf anschließend eine schnelle Abarbeitung durch einfaches Koppeln bzw. Verbinden der einzelnen Anzeigeelemente 11 erfolgt, sodass die Wartezeit für Kunden wesentlich verkürzt werden können.

In den Fig. 2 bis 4 ist die Bearbeitungseinlage 16, im Folgenden auch "Combo-Jig 16" genannt, gezeigt, wobei das Combo-Jig 16 einen Grundkörper 17 und zumindest eine oder mehrere Öffnungen zum Positionieren und Aufnehmen eines Werkstückes 9 aufweist.

Am Grundkörper 19 sind mehrere Aufnahmevorrichtungen bzw. Aufnahmebereiche 20, 21, 22 für unterschiedliche Werkstücke 9, wie beispielsweise einem Stempelplatten-Rohling 9 (Aufnahmebereich 20), ein Werbeschild bzw. Schild (Aufnahmebereich 21), Zusatzaufnahme 17 (Aufnahmebereich 22) für Kugelschreiber, USB-Stick, usw., angeordnet, d.h., dass bei einer derartigen Ausbildung der Bearbeitungseinlage 16 zumindest drei unterschiedliche Typen von Werkstücken 9 bzw. Gegenständen eingelegt werden können, ohne dabei die Bearbeitungseinlage 16 austauschen zu müssen und gleichzeitig sichergestellt ist, dass jedem Gerät bzw. jedem Werkstück 9 eine definierte Ausgangsposition zugeordnet ist, d.h., dass für die jeweiligen Bereiche definierte Punkte, insbesondere ein Nullpunkt und/oder ein Referenzpunkt, hinterlegt ist.

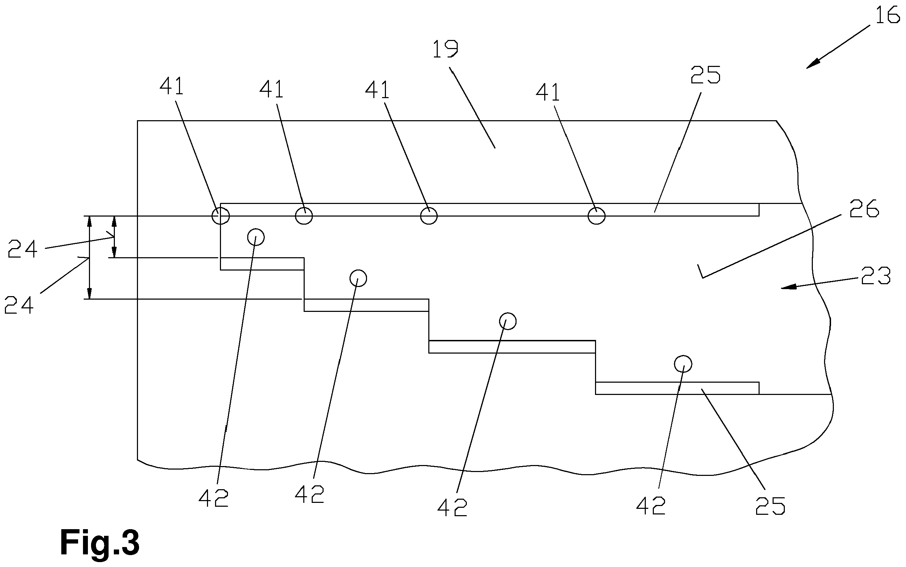

Wie aus Fig. 2 und 3 ersichtlich, ist zumindest eine Aufnahmevorrichtung bzw. ein Aufnahmebereiche 20 für den Stempelplatten-Rohling 9 derart ausgebildet, dass unterschiedliche Größen des Stempelplatten-Rohlings 9 in einer Positionierausnehmung 23 angeordnet bzw. anordenbar sind. Die Positionierausnehmung 23 ist derart ausgebildet, dass eine Seite der Positionierausnehmung 23 stufig ausgebildet ist, wobei die Stufenhöhen 24 entsprechend den unterschiedlichen Stempelplatten-Rohlingen 9 zugeordnet sind, wie dies schematisch in Fig. 3 besser ersichtlich ist. Wie aus Fig. 2 ersichtlich, sind in den verschiedensten Positionsausnehmungen 23 unterschiedlich große Werkstücke 9 zur Veranschaulichung eingelegt, wobei jedoch bevorzugt immer nur ein Werkstück 9, insbesondere ein Stempelplatten-Rohling 9, eingelegt ist, welches vom Laserplotter 15 bearbeitet wird. Wie aus der detaillierten Darstellung ersichtlich, ist die stufig ausgebildete Seite der Positionierausnehmung 23 auf nur einer Längsseitenkante der Positionierausnehmung 23 angeordnet, wobei es für den Fachmann auch möglich ist, diese stufige Ausbildung auch beidseitig auszuführen, wobei sich bei einer beidseitigen stufigen Ausbildung die Stufenhöhe 24 auf jeder Seite reduziert.

Bevorzugt wird jedoch eine einseitig stufig ausgeführte Ausbildung verwendet, da dadurch eine bessere Führung über Führungsnuten 25 erzielt wird, da auf jener Seite in der keine stufige Ausbildung vorhanden ist, die Führungsnuten 25 über einen längeren Bereich, insbesondere über die gesamte Längsseitenkante des Werkstückes 9 bzw. des Stempelplatten-Rohlings 9 verläuft, wogegen im stufigen Bereich nur an der entsprechenden Position der Stufe eine Führungsnut 25 vorhanden ist, welche jedoch nicht über die gesamte Längsseitenkante des Werkstückes 9 verläuft. Wird jedoch die Stufenlänge entsprechend ausgebildet, so kann auch hier über die gesamte Seitenlänge der Stempelplatten-Rohlinge 9 die Führungsnut 25 verlaufen.

Damit eine besseres Gleiten/Rutschen des Stempelplatten-Rohlings 9 in der Positionierausnehmung 23 erzielt wird, ist in der Positionierausnehmung 23 über einen Teilbereich eine bevorzugt silikonierte Auflagefläche 26 angeordnet, die insbesondere wellenförmig bzw. längsrillen aufweist. Dadurch wird erreicht, dass der Stempelplatten-Rohling 9 einfach im hinteren Bereich, also an der gegenüberliegenden Seite zum stufig ausgebildeten Bereich, eingelegt wird und anschließend nach vorn in den stufig ausgebildeten Bereich geschoben werden kann, sodass der Rohling 9 nunmehr einfach auf der Auflagefläche 26 gleiten kann. Durch die wellenförmige Ausbildung der Auflagefläche 26 wird weiters erreicht, dass die Reibkräfte noch zusätzlich verringert werden, da keine vollflächige Auflage am Werkstück 9 bzw. Rohling 9 vorhanden ist. Weiters ist zu erwähnen, dass die dargestellten Führungsnuten 25 nicht zwingend notwendig sind, da der Rohling auch über die Seitenflächen der Positionierausnehmungen 23 positioniert werden kann.

Wie auch aus Fig. 2 ersichtlich, sind bei dem dargestellten Ausführungsbeispiel des Combo-Jig 16 mehrere, insbesondere vier Positionierausnehmungen 23 für Stempelplatten-Rohlingen 9 vorgesehen, sodass eine sehr große Anzahl von unterschiedlichen Stempelplatten-Rohlingen 9 eingelegt werden können, wobei jedoch gleichzeitig eine sehr hohe Platzeinsparung erzielt wird, wie dies im Vergleich zum Stand der Technik aus der österreichischen Prioritätsanmeldung A402/2013 und der darin beschriebenen und dargestellten Bearbeitungseinlage ersichtlich ist.

Weiters ist an der Bearbeitungseinlage 16 ein Aufnahmebereich 21 bzw. eine Aufnahmevorrichtung für ein Werbeschild bzw. Schild (nicht dargestellt) angeordnet, bei dem zumindest eine Positionierkante 27 angeordnet ist. Dadurch kann ein Schild, insbesondere Werbeschild, einfach an die Positionierkante 27 geschoben werden, sodass eine geradlinige Ausrichtung gegeben ist. An der Bearbeitungseinlage 16, insbesondere im Aufnahmebereich 21, sind Aufdrucke für die Positionierung von Schildern dargestellt, wobei für die unterschiedliche Größen entsprechende Darstellung aufgetragen sind. Selbstverständlich können auch andere Schilder mit anderen Größenverhältnissen verwendet werden. Wichtig ist hierbei lediglich, dass das Schild immer an einem Ausgangspunkt, der mit einem Pfeil 28 gekennzeichnet ist, positioniert ist, da der Laserplotter 15 immer von diesem Ausgangspunkt zu arbeiten beginnt. Selbstverständlich ist es möglich, dass in einem Winkel von bevorzugt 90° zur Positionierkante 27 eine weitere Positionierkante, die entlang des Ausgangspunktes -Pfeil 28 - verläuft, angeordnet ist, sodass der User das Schild einfach an die beiden Positionierkante 27 legen kann. Bei entsprechender Ausgestaltung des Combo-Jig 16 ist es auch möglich, dass bevorzugt parallel zur Positionierkante 27 eine verschiebbare und bevorzugt fixierbare Halteschiene (nicht dargestellt) angeordnet bzw. einsetzbar ist. Damit kann bei eingelegtem Schild die Halteschiene auf der gegenüberliegenden Seite zur Positionierkante 27 gegen das Schild gedrückt und fixiert werden, sodass eine optimale Fixierung für das Schild vorhanden ist. Auch ist es möglich, dass auf die Halteschiene ein weiters Schienenelement bzw. weitere um 90° verdrehte Halteschiene verschiebbar angeordnet ist, um das Schild auch in vertikaler Richtung zu befestigen.

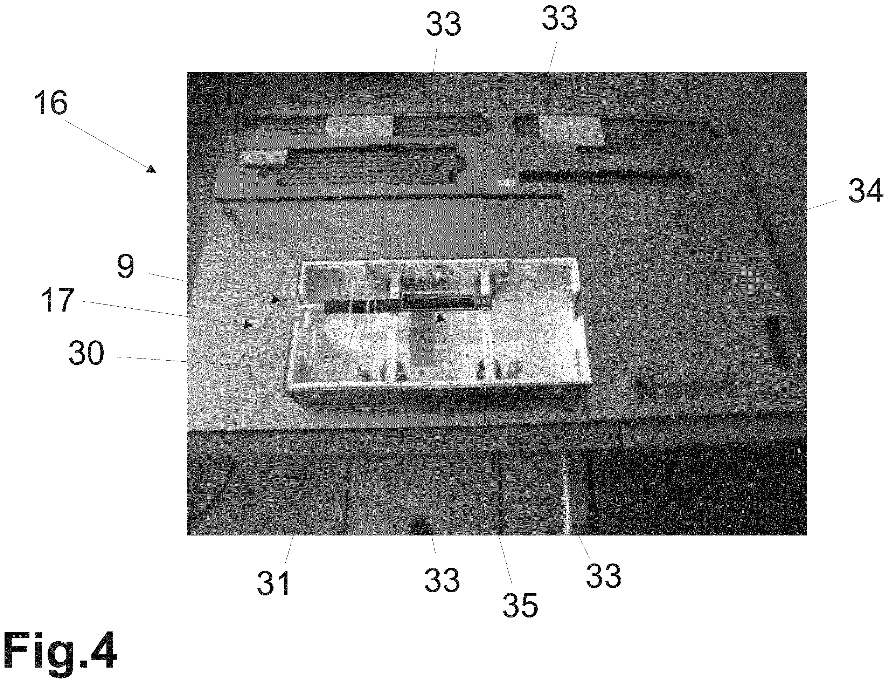

Der Aufnahmebereich 22 bzw. die Aufnahmevorrichtung für die Zusatzaufnahme 17 ist durch Positionieraufnahmen 29 ausgebildet. Dadurch wird sichergestellt, dass beim Einsetzen einer Zusatzaufnahme 17 immer die gleiche Ausgangsposition für den Laserplotter 15 geschaffen wird. In Fig. 4 ist das Combo-Jig 16 mit eingesetzter Zusatzaufnahme 17 dargestellt, wobei die Zusatzaufnahme 17 als Halterelement 30 für das Werkstück 9, insbesondere einen Kugelschreiber 31 oder USB-Stick 32 oder Speicher-Stick, usw., ausgebildet ist. Das Halteelement 30 ist derart ausgebildet, dass dieses das Werkstück 9 über eine Druckkraft, insbesondere über ein Druckelement 33, wie beispielsweise eine Spiralfeder, gegen eine Oberfläche 34 presst und in der Oberfläche 34 eine Ausnehmung 35 vorgesehen ist, über die eine Bearbeitung des Werkstückes 9 möglich ist.

Wie besser aus Fig. 5 ersichtlich, drücken bei dem dargestellten Ausführungsbeispiel die Druckelemente 33 einen Auflagesteg 36 in Richtung der Oberfläche 34, sodass bei eingelegtem Werkstück 9, insbesondere Kugelschreiber 31, dieser gegen die Oberfläche 34 eines Gehäuses gedrückt wird, und sich somit nicht mehr von selbst verdrehen kann., d.h., dass beim Einsetzen des Kugelschreibers 31 in das Halteelement 30 zuerst der Auflagesteg 36 nach unten gedrückt wird, sodass auf einfach Weise der Kugelschreiber 31 positioniert werden kann, und dass anschließend über die Druckelemente 33 der Kugelschreiber 31 gegen die Oberfläche 34 zum Positionieren und Halten gedrückt wird. Durch eine derartige Ausgestaltung des Halteelementes 30 kann auf einfache Weise eine Positionierung von Runden Gegenständen, insbesondere von Kugelschreibern 31, erfolgen. Gleichzeitig kann die Positionierung für die Bearbeitung, insbesondere für eine Gravierung, flexibel verändert werden, da das Werkstück 9 belieb in Längsrichtung verschoben werden kann. Grundsätzlich ist noch zu erwähnen, dass am Auflagesteg 36 bevorzugt eine Einkerbung 37 vorgesehen ist, in die das Werkstück 9 eingelegt wird.

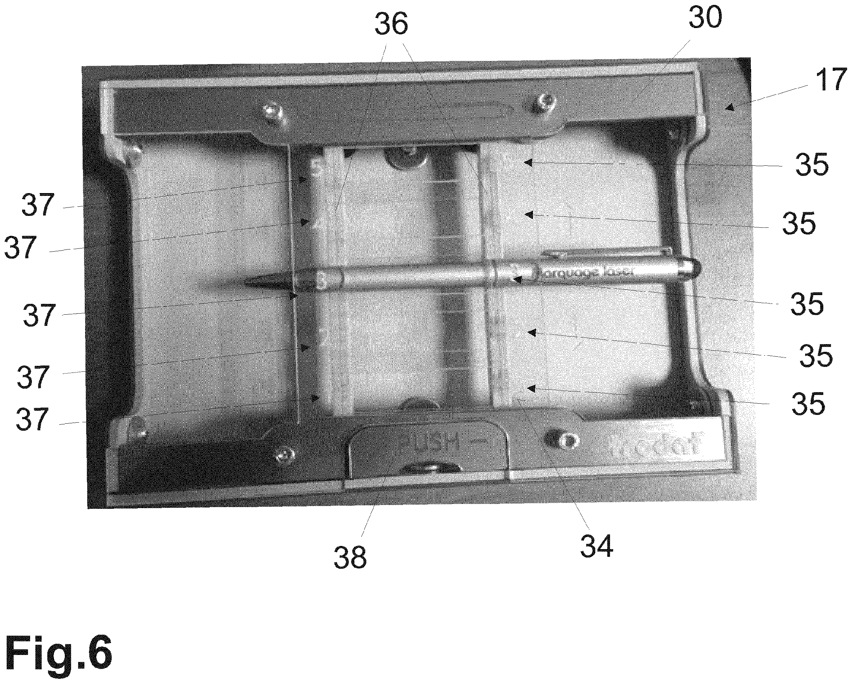

Weiters ist es möglich, dass mehrere Werkstücke 9, insbesondere Kugelschreiber 31, in einem Halteelement 30 einlegbar sind bzw. angeordnet sind, wie dies in einem weiteren Ausführungsbeispiel in Fig. 6 dargestellt ist. Hierzu sind dazu mehrere parallel angeordnete Ausnehmungen 35 zum Bearbeiten über das Bearbeitungsgerät angeordnet, wobei gleichzeitig am Auflagesteg 36 entsprechend zugeordnete Einkerbungen 37 vorgesehen sind, sodass der User beim Einlegen der Kugelschreiber 31 dieser gerade zur Ausnehmung 35 ausgerichtet ist. Bei dem dargestellten Ausführungsbeispiel sind 5 Positionieren zum Anordnen von Kugelschreibern 31 vorgesehen. Weiters erstreckt sich nunmehr die Oberfläche 34 nicht über das gesamte Gehäuse des Halteelementes 30, sondern nur im Zentrum, sodass man beiderseits einfach an die eingelegten Kugelschreiber 31 herankommen kann und diese somit einfach in Längsrichtung positionieren kann. Zusätzlich weist das Halteelement 30 einen Push-Button 38 auf, bei dem durch Betätigen die Auflagestege 36 nach unten gedrückt werden und der Kugelschreiber 31 einfach eingelegt werden kann. Selbstverständlich ist es möglich, auch auf der gegenüberliegenden Seite einen derartigen Push-Button 38 anzuordnen, um von beiden Seiten die Möglichkeit zu haben, den Auflagesteg 36 entgegen der Druckkraft des Druckelementes nach unten zu drücken. Um das Halteelement 30 auf der Bearbeitungseinlage 16 positionieren zu können, ist dieses mit entsprechenden Positioniervorsprüngen (nicht dargestellt) auf der Unterseite ausgestattet, sodass beim Aufsetzen des Halteelementes 30 diese Positioniervorsprünge in die korrespondierenden Positionieraufnahmen 29 einrasten bzw. eingesetzt werden können, sodass immer wieder die gleiche Position auf der Bearbeitungseinlage 16 erreicht wird.

Bei einem derartigen Einsatz einer Zusatzaufnahme 17 für mehrere Kugelschreiber 31 muss in der Bedienersoftware eingegeben werden, an welcher Position ein Kugelschreiber 31 eingelegt ist, um eine störungsfreie Bearbeitung vornehmen zu können. Dies ist jedoch nicht erforderlich, wenn das Bearbeitungssystem 1 mit einem automatischen Werkstück-Erkennungsvorrichtung bzw. Werkstück-Erkennungssoftware ausgestattet ist, wie dies nachträglich noch näher beschrieben wird.

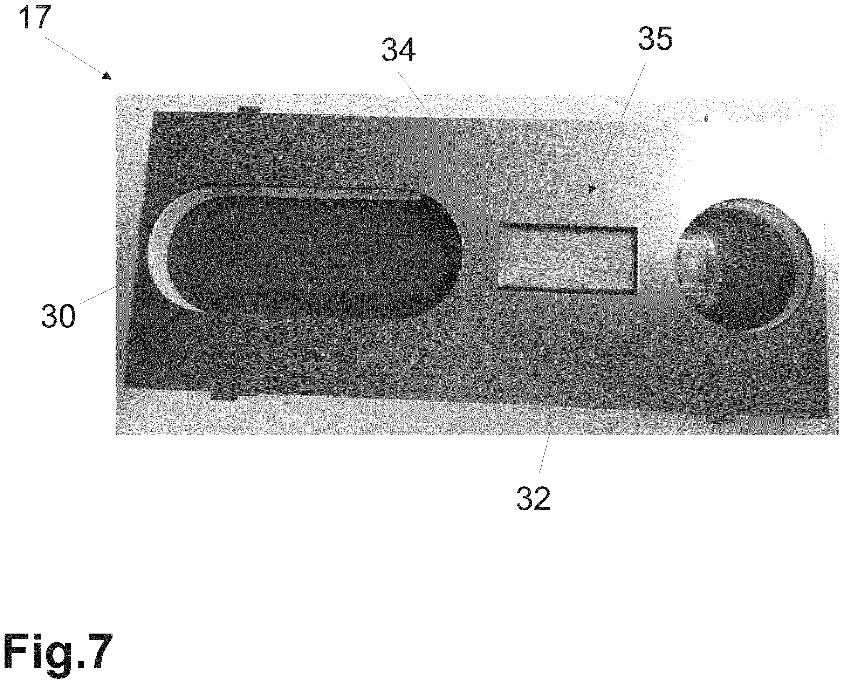

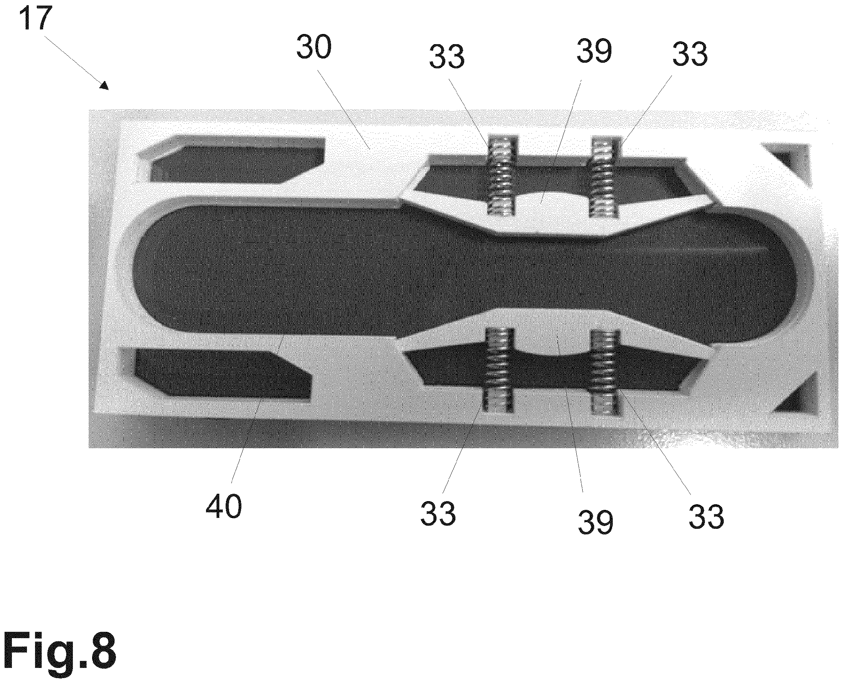

Weiters ist es möglich, dass auch andere Ausführungsvarianten der Zusatzaufnahme 17 verwendet werden können, wie dies in den Fig. 7 und 8 gezeigt ist. Dabei handelt es sich um ein Halteelement 30 für einen USB-Stick 32 bzw. Speicher-Stick 32. Dabei ist in Fig. 7 das Halteelement 30 mit montierter Oberfläche 34 dargestellt, wogegen bei Fig. 8 die Oberfläche 34 abgenommen wurde.

Der Aufbau des Halteelementes 30 entspricht dabei grundsätzlich dem Aufbau gemäß den Fig. 5 und 6 für die Kugelschreiber 31, d.h., dass die Zusatzaufnahme 17, insbesondere das Halteelement 30 für ein Werkstück 9 gebildet ist, und dass dieses zumindest ein Gehäuse, in dem das Werkstück 9 einlegbar ist, umfasst, wobei das Halteelement 30 derart ausgebildet ist, dass dieses das Werkstück 9 über eine Druckkraft von einem Seitenteil 39 positioniert ist und/oder gegen die Oberfläche 34 presst und in der Oberfläche 34 eine Ausnehmung 35 vorgesehen ist, über die eine Bearbeitung des Werkstückes 9 möglich ist bzw. erfolgt. Dadurch wird erreicht, dass durch die beweglichen Teile in dem Halteelement 30, die mit einer entsprechenden Druckkraft von den Druckelementen 33 beaufschlagt werden, eine definierte Positionierung gewährleistet ist.

In Fig. 8 ist lediglich ein Ausführungsvariante des Halteelementes 30 gezeigt, bei dem die Druckelemente 33 auf die Seitenteile 39 einwirken und diese in Richtung Mitte des Haltelementes 30 drücken. Dadurch wird beim Einlegen des USB-Sticks 31 diese Seitenteile 39 nach außen gedruckt und positionieren durch die einwirkende Druckkraft den USB-Stick dadurch immer im Mittel der Ausnehmung 35 für die Bearbeitung. Selbstverständlich ist es möglich, das Halteelement 30 derart zu ergänzen, dass zusätzlich zumindest ein Teilbereich einer Bodenplatte 40, insbesondere unterhalb der Ausnehmung35, über derartige Druckelemente 33 in Richtung Oberfläche 34 (wie in den Fig. 5 u. 6 ausgeführt) gedrückt wird, sodass bei eingelegtem Werkstück 9, insbesondere USB-Stick 32 dieser gegen die Oberfläche 34 gepresst wird.

Wesentlich bei der Ausbildung derartiger Halteelemente 30 ist, dass diese das Werkstück 9 immer in einer für die Bearbeitung vorgesehene definierte Position zur Ausnehmung 35 drücken bzw. halten, was auf einfache Weise durch mit Druckelementen 33 beaufschlagte Komponenten erfolgt.

Für eine einfache Bearbeitung ohne Fachpersonal ist es erforderlich, dass der Bearbeitungsprozess nach dem Einlegen des Werkstückes 9 vollkommen automatisch durchgeführt wird. Damit dies möglich ist, ist für die einzelnen Aufnahmevorrichtungen bzw. Aufnahmebereiche 20, 21, 22 ein Nullpunkt 41 und/oder vorzugsweise ein Referenzpunkt 42 hinterlegt bzw. definiert, wie dies schematisch in Fig.3. in Form eines symbolischen Kreises eingezeichnet wurde. Dadurch wird eine selbstständige Positionierung des Bearbeitungsgerätes, insbesondere des Laser vom Laserplotter 15, zum Werkstück 9 möglich, sodass ausgehend von dieser Position, also dem Nullpunkt 41, die Bearbeitung des Werkstückes 9 erfolgt. Durch das definieren der verschiedensten Nullpunkte 41 bzw. Ausgangspunkte wird auch eine wesentlich raschere Bearbeitung erzielt, da das Bearbeitungsgerät möglichst schnell an den Nullpunkt 41 fahren kann bzw. verstellbar ist und erst bei der Bearbeitung auf einer langsamere Bearbeitungsgeschwindigkeit zur Erzielen einer optimalen Qualität reduziert wird. Der Nullpunkt 41 definiert dabei immer eine bestimmte Anfangsposition des Werkstückes 9, wogegen der Referenzpunkt 42 innerhalb des Werkstückumfanges angeordnet ist. Bei dem dargestellten Ausführungsbeispiel in Fig. 3 ist für jede Größe eines Stempelplatten-Rohlings 9 ein eigener Nullpunkt 41 und/oder Referenzpunkt 42 dargestellt bzw. gespeichert, wobei es jedoch möglich ist, dass bei einem derartigen stufigen Aufbau der Positionierausnehmung 23 nur der erste Nullpunkt 41 und/oder Referenzpunkt 42 hinterlegt ist und die weiteren Punkte ausgehend von den ersten Nullpunkt 41 und/oder Referenzpunkt 42 berechnet wird.

Damit die Steuereinheit 4 bzw. das Bearbeitungsgerät weiß welchen Ausgangspunkt angefahren werden soll, wird in der Bedienersoftware am Anzeigeelement 11 vom User bzw. Kunden ein Werkstück 9 bzw. die Art des Werkstückes 9 ausgewählt, sodass dies nach dem Koppeln bzw. Verbinden mit dem Bearbeitungssystem 1 diese Informationen an den Steuersoftware übergeben wird, die anschließend den entsprechenden Nullpunkt 41 ermittelt und die Steuerung zum Anfahren des Punktes einfach möglich ist. Die Daten bzw. Nullpunkte 41 und/oder Referenzpunkte 42 sind in einem Speicher, insbesondere in einer im Bearbeitungsgerät integrierte Datenbank, hinterlegt, sodass jederzeit darauf zugegriffen werden kann.

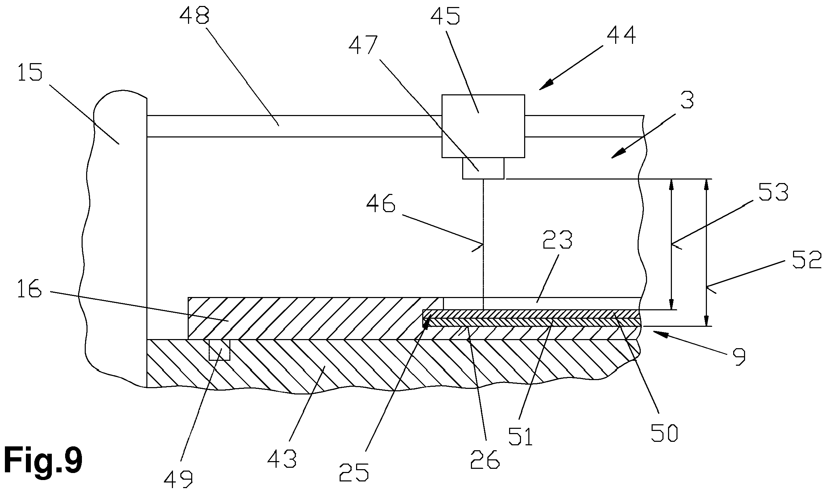

In Fig. 9 ist eine schematisch, vereinfachter Aufbau des Laserplotters 15 zum Gravieren, Markieren, Beschriften und/oder Bearbeiten einer Einlage, insbesondere des Stempelplatten-Rohlings 9 bzw. Werkstücks 9 gezeigt. Der Laserplotter 15 umfasst zumindest einen Bearbeitungstisch 43 zum Positionieren der Bearbeitungseinlage 16, zumindest eine Strahlenquelle (nicht dargestellt) in Form eines Lasers 44 mit entsprechenden Umlenkelementen 45 für einen Laserstrahl 46 und eine bevorzugt verfahrbare Fokussiereinheit 47, die auf einen ebenfalls verfahrenbaren Schlitten 48 montiert ist. Die einzelnen Komponenten sind mit einem Steuergerät, insbesondere dem Steuerbereich 4 zum Steuern der einzelnen Elemente verbunden. Das Steuergerät, insbesondere der Steuerbereich 4 ist zumindest zum Empfang von an einer externen Komponente erzeugten Daten, beispielsweise einer Grafik und/oder Text ausgebildet. Der Bearbeitungstisch 43 ist zur Aufnahme und Positionierung der Bearbeitungseinlage 16 ausgebildet, wobei die exakte Positionierung über ein oder mehrere Positionierelemente 49, insbesondere Positionierzapfen, erfolgt. In der Bearbeitungseinlage 16 ist das Werkstück 9, insbesondere der Stempelplatten-Rohling 9, in der Positionierausnehmung 23 eingelegt, wobei das Werkstück 9, insbesondere der Stempelplatten-Rohling 9 aus einem Grundmaterial 50 und einer Grundplatte 51 gebildet ist, wie dies genauer in der Prioritätsanmeldung definiert und entnommen werden kann. Zum Erreichen einer ebenflächigen Oberfläche des Grundmaterials 50 ist das Grundmaterial 50 für die Bearbeitung auf der Grundplatte 51 abnehmbar positioniert. Das Grundmaterial 50 besteht bevorzugt aus einem silikonhaltigen Gummi, der sehr flexibel ist und somit für eine besseren Positionierung auf ein Trägermaterial, insbesondere der Grundplatte 51, aufgebracht ist. Mit einem derartigen Aufbau kann der Stempelplatten-Rohling 9 einfach in die Positionierausnehmung 23 eingelegt und anschließend auf der Auflagefläche 26 in die Führungsnuten 25 zum Positioniere und Fixieren eingeschoben werden.

Um die Bedienerfreundlichkeit des Bearbeitungssystem zu erhöhen und ev. Fehlerquellen zu vermeiden, ist es vorteilhaft, wenn eine Werkzeug-Positionserkennungssystem installiert ist. Dieses kann hardwaremäßig durch Sensoren im Bearbeitungsbereich 3 und/oder in der Bearbeitungseinlage 16 erfolgen oder über eine softwaretechnische Lösung, wie dies nachträglich beschrieben ist.

Bei einer softwaretechnische Lösung ist es erforderlich, dass die verschiedensten möglichen Positionen der Werkstücke 9 bekannt sind, d.h., dass zu den einzelnen möglichen Werkstückpositionen die entsprechenden Nullpunkte 41 und/oder Referenzpunkte 42 hinterlegt sind. Zusätzlich ist zu jedem Nullpunkt 41 und/oder Referenzpunkt 42 eine Höhe, insbesondere ein Höhenwert 53 ohne eingelegte Werkstück 9, gespeichert ist. Dieser Höhenwert 53 wird vom Laser 44 ermittelt, wobei zur Vermeidung von Oberflächenbeschädigungen die Laserleistung reduziert wird, d.h., dass der Laser 44 zum Ermittelten eines Höhenwertes 53 und zum Bearbeiten, insbesondere gravieren, markieren, schneiden, materialabtragen von Werkstücken 9, ausgelegt ist, wobei für die Ermittlung des Höhenwertes 52 die Leistung derart verändert wird, dass eine Beschädigung der Oberfläche beim Messvorgang verhindert wird. Selbstverständlich ist es auch möglich, dass eine zusätzliche Höhenmessvorrichtung am Schlitten 48 verfahrbar angeordnet ist, sodass der Laser 44 keine Höhenmessungen durchführen muss.

Die Ermittlung des in der Bearbeitungseinlage 16 eingelegten Werkstückes 9 erfolgt derart, dass an einem Eingabegerät, insbesondere an dem Anzeigeelement 11, vom Nutzer ein gewünschter Bearbeitungsvorgang über die Bedienersoftware erstellt wird, worauf der Bearbeitungsvorgang an ein Steuergerät, insbesondere an eine Steuersoftware, übergeben wird und von diesem derart umgewandelt wird, dass eine Ansteuerung eines Bearbeitungsgeräts, insbesondere des Laserplotters 15, zum Durchführen des gewünschten Bearbeitungsvorgang durchgeführt wird. Von dem Steuergerät bzw. der Steuereinheit 4 oder dem Bearbeitungsgerät wird vor dem Start des Bearbeitungsvorganges eine Positionserkennung des in das Bearbeitungsgerät eingelegten Werkstückes 9 durchgeführt, bei dem aufgrund des gewünschten Bearbeitungsvorganges eine Werkstückposition ermittelt wird, worauf an dieser definierten Positionen eine Höhenmessung durchgeführt wird. Die ermittelte Höhe bzw. der ermittelte Höhenwert 53 wird mit einer zu dieser Position hinterlegten Höhe bzw. Höhenwert 52 verglichen, sodass das Steuergerät bzw. das Bearbeitungsgerät, insbesondere die Steuersoftware, erkennen kann, ob ein zu bearbeitendes Werkstück 9 in die richtige Position eingelegt wurde.

Die Ermittlung erfolgt bei einem derartigen Vorgehen auf einfach Art und Weise durch Vergleich des gespeicherten Höhenwertes 52 mit dem gemessenen Höhenwert 53. Wird als gespeicherter Höhenwert 52 dieser ohne Werkstück 9 (wie in Fig. 9 gezeigt) hinterlegt, so muss bei eingelegtem Werkstück 9 der gemessen Höhenwert 53 unterschiedlich, insbesondere kleiner, als der gespeicherte Höhenwert 52 sein, sodass das Werkstück 9 richtig eingelegt ist. Stimmen die beiden Werte hingegen überein, so wurde das Werkstück 9 falsche positioniert. Bei falsch eingelegtem Werkstück 9 wird der Bearbeitungsprozess nicht gestartet.

Wird jedoch der gespeicherte Höhenwert 52 mit eingelegte Werkstück 9 hinterlegt, so müssen die beiden Werte übereinstimmen, wenn das Werkstück 9 richtig eingelegt ist. Diese Möglichkeit ist nur dann zu empfehlen, wenn sichergestellt ist, dass immer Werkstücke 9 mit bekannter Höhe eingelegt werden. Bei der beschriebenen Ausführungsvariante wird bevorzugt der Höhenwert 52 ohne eingelegtem Werkstück 9 gespeichert, sodass eine Erkennung des eingelegten Werkstück 9 in die Aufnahmevorrichtung bzw. den Aufnahmebereich 20, 21, 22 über den Nullpunkt 41 oder vorzugsweise über den Referenzpunkt 42 durch Messung der Höhe bzw. des Höhenwertes 53 erfolgt bzw. möglich ist.

Ist eine derartige Messvorrichtung bzw. Höhenmessung mit dem Laser 44 möglich, so ist es auch möglich, dass eine automatische Vermessung eines eingelegte Werkstückes 9, insbesondere eines Schildes bzw. Werbeschildes, möglich. Dazu wird bei der Auswahl an der Bedienersoftware Schild bzw. Werbeschild nach Aktivierung durch verbinden bzw. koppeln des Anzeigeelementes 11 mit dem Bearbeitungssystem, der Laser 44 auf den Nullpunkt 41 für den Aufnahmebereich 21 gestellt und anschließend eine Höhenmessung parallel entlang der Positionierkante 27 und anschließend in einem Winkel von 90° durchgeführt.

Die Ermittlung der Länge und Breite kann dabei auf unterschiedliche Weise erfolgen, da dies auf unterschiedliche softwaretechnische Auswertungen möglich ist. Beispielsweise kann eine kontinuierliche Höhenmessung erfolgen, wobei der gemessene Höhenwert 53 mit dem zuvor gemessen Höhenwert 53 verglichen wird. Unterscheiden sich die beiden Höhenwerte 53, so hat der Laser 44 das Ende des Schildes erreicht und es kann der verfahrene Weg berechnet werde, der mit der Länge oder Breite des Schildes übereinstimmt. Andererseits ist es beispielsweise möglich, dass der gemessenen Höhenwert 53 mit einem hinterlegtem Höhenwert 52 ohne Werkstück 9 verglichen wird, sodass bei Übereinstimmung der beiden Höhenwerte 52 und 53 das Ende des Schildes erkannt wird und die Strecke bzw. Länge oder Breite ermittelt wird, d.h., dass ausgehend vom Nullpunkt durch vertikales und horizontales Abtasten des Bearbeitungsbereichs entsprechende Höhenwerte 53 ermittelt werden, aus denen die Werkstückgröße berechnet wird. Der wesentliche Vorteil bei einer derartigen Ausbildung liegt darin, dass der User lediglich das Werkstück 9, insbesondere das Schild, in den entsprechenden Aufnahmebereich 21 positioniert und somit Fehleingaben vermieden werden können.

Auch kann bei entsprechender Ausführung der Zusatzaufnahme bzw. des Halteelementes 30 eine automatische Erkennung des Zusatzmoduls bzw. Halteelementes 30 vorgenommen werden, d.h., dass aufgrund des ermittelten Höhenwertes 53, insbesondere im Bereich der Zusatzaufnahme, die verwendete Zusatzaufnahme, insbesondere ein Haltelement 30, ermittelt wird, in dem in einem bestimmten Bereich ein Höhenwert 52 mit entsprechender Zusatzinformation, wie beispielsweise Kugelschreiber 31 oder USB-Stick 32, hinterlegt ist, sodass bei eingesetztem Halteelement 30 und Übereinstimmung des Höhenwertes 52, 53 auf das Halteelement 30 rückgeschlossen werden kann. Dazu sind die Zusatzaufnahmen unterschiedlich hoch ausgebildet bzw. ist der Messpunkt für die Höhenmessung unterschiedlich hoch ausgebildet. Somit kann sicher gestellt werde, ob das richtige Halteelement 30 für die gewählte Funktion in der Bedienersoftware eingesetzt ist.

Durch die Integration der Höhenmessung über den Laser 44 ist es auch möglich, dass bei der Inbetriebnahme oder beim Tausch der Bearbeitungseinlage 16 eine automatische Höheneinstellung des Bearbeitungstisches 43 durchgeführt werden kann. Selbstverständlich ist natürlich auch jede andere Art und Weise zur Einstellung der Höhe des Bearbeitungstisches 43 möglich, wie dies aus dem Stand der Technik bekannt ist.

Bei dem Aufbau der Bearbeitungseinlage 16 ist es auch möglich, dass der mechanisch Aufbau der Zusatzaufnahmen, insbesondere der Halteelemente 30, direkt in die Bearbeitungseinlage 16 integriert ist. Insbesondere kann dies bei größeren Anlagen, bei dem beispielsweise der Bearbeitungsbereich eine Größe größer A3 aufweist, erfolgen. Bevorzugt wird das Bearbeitungssystem 1, insbesondere der Laserplotter 15, mit einem Bearbeitungsbereich 3, insbesondere dem Bearbeitungstisch 43, mit einer Größe von in etwa A3 verwendet bzw. eingesetzt.

Weiters ist es möglich, dass im Grundköper 19 des Combo-Jig 16, insbesondere in den Bereiche zum Positionieren der Werkstücke 9, durchgehende Bohrungen angeordnet sind. Dadurch ist es möglich, dass die Luft unterhalb der Bearbeitungseinlage 16 von der Absauganlage abgesagt wird, sodass dadurch ein Unterdruck erzeugt wird und somit das Werkstück 9 gegen die Bodenfläche der Bearbeitungseinlage 19 gedrückt wird. Somit wird eine zusätzlich Fixierung des Werkstückes 9 ermöglicht.

Grundsätzlich ist zu erwähnen, dass zur Erhöhung der Sicherheit und zur weiteren Automatisierung der Anlagen die einzelnen Komponenten mit Sensoren, Schaltelementen, usw. ausgestattet sein kann.

Desweiteren wird darauf hingewiesen, dass die in der parallel-laufenden österreichischen Prioritätsanmeldung A402/2013 beschriebenen Komponenten, insbesondere der Aufbau des Stempelplatten-Rohlings, und die Bedienersoftware entnommen und übertragen werden können.

Der Ordnung halber sei abschließend darauf hingewiesen, dass zum besseren Verständnis des Aufbaus des Systems 1 und deren Komponenten bzw. dessen Bestandteile teilweise unmaßstäblich und/oder vergrößert und/oder verkleinert dargestellt wurden.

## Patentansprüche

1. Zusatzaufnahme, insbesondere Halteelement (30), für ein Werkstück (9), umfassend zumindest ein Gehäuse in dem das Werkstück (9) einlegbar ist, **dadurch gekennzeichnet, dass** das Halteelement (30) derart ausgebildet ist, dass dieses das Werkstück (9) über eine Druckkraft von einem Seitenteil (39) positioniert ist und/oder von einer Bodenplatte (40) oder Auflagesteg (36) gegen eine Oberfläche (34) presst und in der Oberfläche (34) eine Ausnehmung (35) vorgesehen ist, über die eine Bearbeitung des Werkstückes (9) möglich ist bzw. erfolgt.

2. Zusatzaufnahme nach Anspruch 1, **dadurch gekennzeichnet, dass** die Druckkraft von einem Druckelement (33), insbesondere einer Spiralfeder, gebildet ist.

3. Zusatzaufnahme, insbesondere Halteelement (30), nach Anspruch 1 oder 2, **dadurch gekennzeichnet, dass** in einem Halteelement (30) mehrere parallel angeordnete Werkstücke (9) positionierbar sind.

4. Zusatzaufnahme, insbesondere Halteelement (30), nach einem oder mehreren der vorhergehenden Ansprüche 1 bis 3, **dadurch gekennzeichnet, dass** an den Auflagestegen (36) bzw. der Bodenplatte (40) zumindest eine Einkerbung (37), die bevorzugt das Werkstück (9) gerade zur Ausnehmung (35) ausrichtet, angeordnet ist.

5. Zusatzaufnahme, insbesondere Halteelement (30), nach einem oder mehreren der vorhergehenden Ansprüche 1 bis 4, **dadurch gekennzeichnet, dass** ein Bush-Button (38) für die Auflagestege (36) bzw. für die Bodenplatte (40) angeordnet ist, der diese entgegen der Druckkraft zum Einlegen der Werkstück (9) betätigt.
